Europäisches Patentamt

European Patent Office

Office européen des brevets

(19)

(11) Publication number: **0 422 066 B1**

# (12) EUROPEAN PATENT SPECIFICATION

(45) Date of publication of patent specification: **09.11.94**

(51) Int. Cl.[5]: **C01B 17/775**, C25B 1/22, B01D 53/34, C01B 17/48, C01B 17/76

(21) Application number: **89907403.3**

(22) Date of filing: **14.04.89**

(86) International application number:
**PCT/US89/01597**

(87) International publication number:
**WO 90/12753 (01.11.90 90/25)**

(54) **REMOVAL OF SULFUR DIOXIDE (SO 2?) FROM WASTE GASES AND RECOVERY AS SULFURIC ACID.**

(43) Date of publication of application:
**17.04.91 Bulletin 91/16**

(45) Publication of the grant of the patent:
**09.11.94 Bulletin 94/45**

(84) Designated Contracting States:
**BE DE FR GB IT NL**

(56) References cited:
**US-A- 825 057**
**US-A- 3 836 630**
**US-A- 3 944 401**
**US-A- 4 830 718**

**See also references of WO9012753**

(73) Proprietor: **Stauffer, John E.**
**6 Pecksland Road**
**Greenwich Connecticut 06830 (US)**

(72) Inventor: **Stauffer, John E.**
**6 Pecksland Road**
**Greenwich Connecticut 06830 (US)**

(74) Representative: **Kügele, Bernhard**
**NOVAPAT-CABINET CHEREAU,**
**9, Rue du Valais**
**CH-1202 Genève (CH)**

## Description

The present invention concerns a process for the mitigation and control of air pollution caused by the emission of sulfur dioxide in effluent vent, flue or exhaust gas, said process comprising the removal of sulfur dioxide from such effluent vent, flue or exhaust gas by means of steps in a continuous cycle of

scrubbing the gas in an absorber or scrubbing column with an aqueous acid stream comprising sulfuric acid to solubilize and remove sulfur dioxide from the gas

passing the aqueous acid stream subsequently to absorption of said sulfur dioxide through an electrolytic cell comprising an anode and a cathode,

applying an electrical potential across said electrodes, and

recycling the acid stream to the scrubbing column while withdrawing by-product sulfuric acid and while maintaining the concentration of the aqueous acid stream by means of make-up water or acid.

Various methods have been described for the removal of sulfur dioxide from a waste gas stream.

A majority of these methods resort to the use of alkaline solutions containing sodium or lime to remove sulfur dioxide. Others propose to oxidize sulfur dioxide with air or oxygen using catalysts to promote the reaction. Additional processes make use of oxidizing reagents such as hypochlorite to convert sulfites to sulfates.

US patent No. 825.057 discloses a method in which $SO_2$ containing gases are led through a solution of sulfuric acid where it dissolves and the solution is then subjected to electrolysis in order to oxidize the dissolved $SO_2$ into sulfuric acid.

The available emission control methods present certain technical difficulties and economical disadvantages. The alkaline scrubbing processes produce waste products that are useless and a problem to dispose of. In the catalytic processes, the catalysts may become fouled and lose their activity. Oxidizing reagents are costly, require precise metering, and are thermally unstable. In the method of US 825.057 the capital investment is relatively high according to the need of a separate electrolysis cell.

### Summary and Detailed Description

In order to overcome the drawbacks of the prior art, the process of the present invention is characterized in that said scrubbing of the gas is carried out in a column containing packing material, which is electrically conductive and which serves both as a gas-liquid contact surface and as an electron chemically active surface of said anode, whereby said sulfur dioxide is converted upon absorption in said acid stream into sulfurous acid said acid stream containing about 5-93 weight percent of sulfuric acid and whereby said electrolysis is carried out such as to oxidize said sulfurous acid into sulfuric acid.

The range of concentration of sulfuric acid in the acid stream is determined largely by electrical conductivities. For dilute aqueous sulfuric acid, from about 5 weight percent acid up to the concentration of oil of vitriol, namely, about 93 weight percent acid, the conductivities in mho/cm$^2$ x 10$^4$ at 18°C, are greater than 1000. In the range between 5 weight percent and 70 weight percent the values of conductivities exceed 2000, and within the limits of 20 weight percent and 40 weight percent the values are above 6500.

The absorber or scrubbing column may be of conventional design or modified design for passage of a stream of effluent gas therethrough. The scrubbing column contains packing material that provides gas-liquid contact surface for the gas stream and the aqueous acid stream. The design of the packing material is critical in order to minimize channeling and thereby achieve greater scrubbing efficiency.

From time to time, as desired, the by-product sulfuric acid is withdrawn in desired quantity from the acid stream. This is done, for example, while adding or making-up with water to lower the acid concentration to a prodetermined level. In a preferred embodiment, the dissolved sulfur dioxide in the acid stream is kept at a minimum concentration by operating at a low current density which in turn is accomplished by employing an anode with increased area, preferably by employing an anode comprising electrically conductive packing in the scrubbing column.

### Brief Description of the Drawings

The invention will be better understood by reference to the accompanying drawing in which:

FIGURE 1 is a diagrammatic view according to the Prior Art of a scrubber and an electrolytic cell in series with a pump for acid-stream-processing of flue gas through the scrubber and cycling the acid stream via the cell back to the scrubber; and

FIGURE 2 is a similar view in which the anode of the electrolytic cell is located as gas-liquid contact packing with the scrubber.

### Detailed Description of the Preferred Embodiments

Electrolysis according to the invention is an effective and efficient method of converting sulfurous acid (as well as $SO_2$), to sulfuric acid. No additive is introduced which might contaminate the by-product acid produced. There are no catalysts which may become fouled. Because the electrochemical potential for the reaction is relatively low, the cost of power is moderate. In short, the present electrolytic process has the important advantage that it is direct and simple to operate.

In the electrolytic cell according to the invention, the following reactions take place:
At the anode:

$$H_2SO_3 + H_2O \rightarrow SO_4^= + 4H^+ + 2e^-$$
$$E^0 = -0.20v$$

and at the cathode

$$2H^+ + 2e^- \rightarrow H_2 \quad E^0 = 0 \text{ v.}$$

The net reaction therefore is

$$H_2SO_3 + H_2O \rightarrow 2H^+ + SO_4^= + H_2$$
$$E^0 = -0.20v.$$

An additional reaction at the anode is as follows:

$$H_2SO_3 + H_2O \rightarrow HSO_4^- + 3H^+ + 2e^-$$
$$E^0 = -0.11v$$

The above reaction is favored since the equilibrium constant, K, equals $1.3 \times 10^{-2}$ for the following reaction:

$$HSO_4^- \rightarrow H^+ + SO_4^=$$

Therefore the power requirements are less than would be the case if the sulfuric acid were completely disassociated. The above theoretical electrode potentials, however, only indicate the relative power needs. In practice, the theoretical voltages cannot be obtained because of electrode polarization. To overcome this irreversibility, a significant overvoltage must be applied equal to the minimum potential of about 0.6 volts. Also sufficient voltage must be applied to compensate for the potential drop in the electrolyte. Notwithstanding these less than ideal conditions, power costs are tolerable, especially when the process is applied to the special case of scrubbing of power plant flue gases which power plants ipso facto have wholesale electric power available.

A general expression for the total cost of removing sulfur dioxide pollutant is:

$$S = Ec + U - R$$

where S is the unit cost, E is the cell voltage, C is the cost of electricity, U is the fixed cost, i.e. amortization, insurance, maintenance, etc., and R is credit given for by-product acid.

The capacity of a pollution control unit to remove sulfur dioxide by the present invention is readily adjustable so that upsets can be handled. For example, any surge in the volume of vent gas or increase in sulfur dioxide concentration can adequately be met. This result is accomplished by raising the applied voltage thus causing an increase in electrode current density. To cope with emergencies or irregularities the potential across the electrodes can be raised as high as 1.7 volts, which is the potential where nascent oxygen begins to form. The applied cell voltage would thus be equal to the potential across the electrodes plus the potential through the electrolyte. The latter value is dependent on the acid conductivity and cell geometry.

Vent or flue gases are contacted at ambient temperature or higher but below the acid's boiling point in an absorber or scrubbing column with a downstream of dilute aqueous sulfuric acid. This acid stream strips the sulfur dioxide from the gas stream. The acid containing the absorbed sulfur dioxide is passed to an electrolytic cell which con-verts the $SO_2$ as sulfurous acid to more sulfuric acid. Hydrogen is vented from the cell. The electrodes must stand up to the corrosive conditions and therefore are fabricated from suitable inert electrode material such as lead, graphite, platinum, palladium, or ruthenium.

By operating the process with dilute sulfuric acid, the electrical resistance is minimized. Acid between 20% and 40% by weight has the greatest conductance and is preferred. It also rapidly absorbs sulfur dioxide. In order to maintain this concentration, make-up water or concentrated acid must be added depending on the moisture content of the flue gas. By-product acid is withdrawn from the system as it is produced.

A preferred modification of the process provides an improvement in its efficiency. In order to remove a maximum amount of sulfur dioxide from the gas stream, the dissolved sulfur dioxide in the acid must be maintained at a minimum concentration. This result, as indicated, can be achieved by increasing the area of the anode. A further advantage of increasing the anode area is that the overvoltage can thereby be reduced as the current density drops.

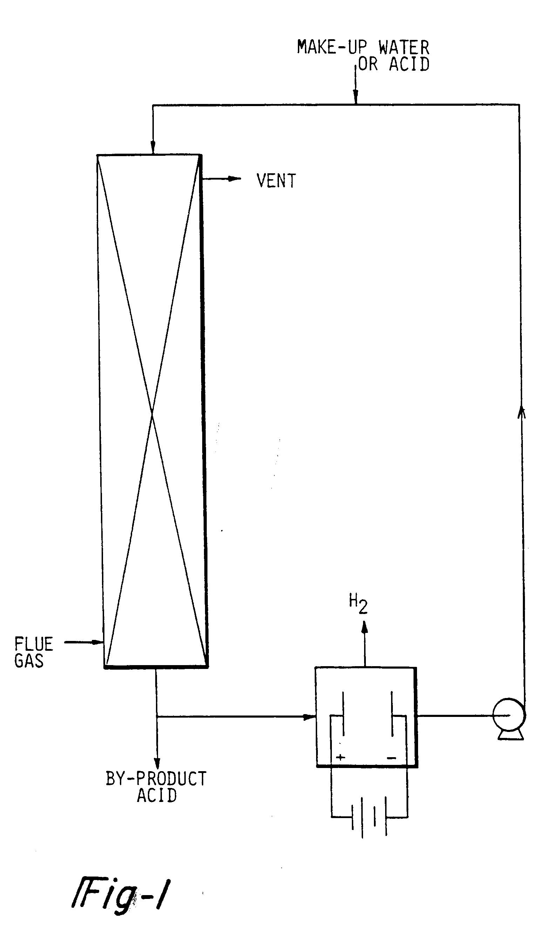

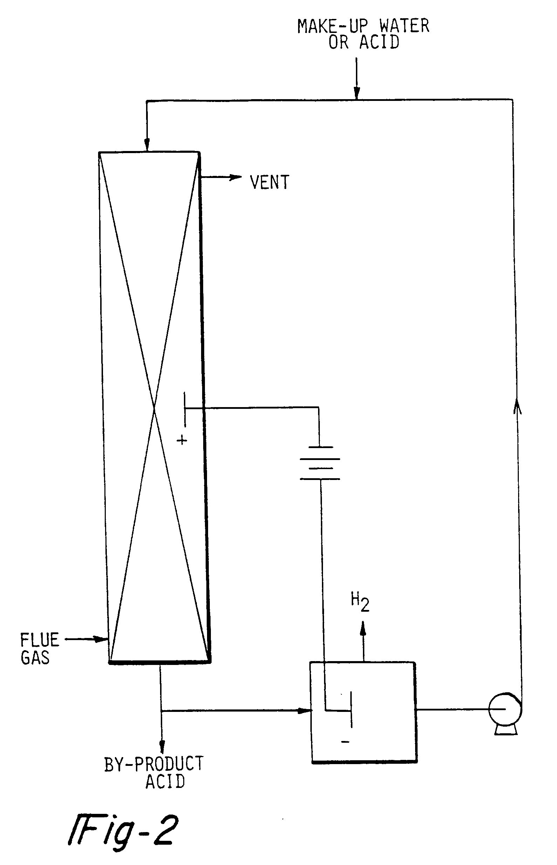

One preferred way of enlarging the anode area is by using the packing in the scrubbing column for the dual purposes of providing gas-liquid contact surface and also serving as the anode. This design has the further advantage of improving the transport of sulfite ions through the diffusion layer. In this application, the packing must be made of an electrically conductive material such as graphite, graphite treated with a noble metal, or platinum-plated zirconium. Whereas figure 1 illustrates a traditional process as described above, figure 2 shows the layout of the process in which, according to the invention the column packing functions as the anode.

One of the principal advantages of the present invention is that a valuable by-product is produced. The weak acid with or without nitrogen values may be used in the production of fertilizer. Alternatively, the acid may be concentrated and purified by procedures well known to the trade. This concentrated acid may be used for many industrial purposes, thus improving the economics of the pollution control process.

The potential applications of the present invention are numerous, but four uses stand out as being particularly significant. The process can be applied to the cleaning of flue gases from power plants that burn high sulfur coal or fuel oil. Environmental pollution including acid rain are thereby reduced. Another application is in the control of sulfur dioxide from smelters that roast sulfide ores.

Thirdly, the process can be used to clean the vent gases from contact sulfuric acid plants. The process controls excessive emissions of sulfur dioxide during plant start-up and any upsets in the operation. It also allows greater utilization of plant capacity without contributing additional emissions of sulfur dioxide to the atmosphere. The weak acid produced by the process is recycled to the acid plant for fortification.

Finally, the process is used to treat flue gases from waste incinerators. The potential sources of sulfur dioxide include high sulfur fuel used to operate the incinerator, vulcanized rubber goods, and certain plastics. By incorporating an oxidizing agent such as dichromate or permangante into the scrubbing solution in a odor-inhibiting quantity (e.g. 4 wt. %) odors form traces of organic substances can be minimized. The oxidizing agent is rejuvenated by the electric current during the electrolysis step.

## Claims

1. A process for the mitigation and control of air pollution caused by the emission of sulfur dioxide in effluent vent, flue or exhaust gas, said process comprising the removal of sulfur dioxide from such effluent vent, flue or exhaust gas by means of steps in a continuous cycle of

scrubbing the gas in an absorber or scrubbing column with an aqueous acid stream comprising sulfuric acid to solubilize and remove sulfur dioxide from the gas

passing the aqueous acid stream subsequently to absorption of said sulfur dioxide through an electrolytic cell comprising an anode and a cathode,

applying an electrical potential across said electrodes, and

recycling the acid stream to the scrubbing column while withdrawing by-product sulfuric acid and while maintaining the concentration of the aqueous acid stream by means of make-up water or acid, characterized in that said scrubbing of the gas is carried out in a column containing packing material, which is electrically conductive and which serves both as a gas-liquid contact surface and as an electrochemically active surface of said anode, whereby said sulfur dioxide is converted, upon absorption in said acid stream into sulfurous acid, said acid stream containing about 5-93 weight percent of sulfuric acid and whereby said electrolysis is carried out such as to oxidize said sulfurous acid into sulfuric acid.

2. A process according to claim 1, where the range of concentration of sulfuric acid in the acid stream is from about 5 to about 70% by weight.

3. A process according to claim 1, where the range of concentration of sulfuric acid in the acid stream is from about 20 to about 40% by weight.

4. A process according to claim 1, where the absorber or scrubbing column is adapted for passage of a stream of effluent gas therethrough.

5. A process according to claim 1, where the electrolysis comprises the reaction :

$$H_2SO_3 + H_2O \rightarrow 2H^+ + SO_4^= + H_2 \quad E^o = -0.20 \text{ v.}$$

## Patentansprüche

1. Verfahren zur Mäßigung der und zur Kontrolle über die durch die Emission von Schwefeldioxyd in ausströmenden Gasen, Rauch- oder Abgasen verursachte Luftverschmutzung, welches Verfahren das Entfernen von Schwefeldioxyd aus einem solchen ausströmenden Gas, Rauch- oder Abgas mit Hilfe der Verfahrensschritte eines fortlaufenden Zyklus, wie folgt, umfaßt:

Naßreinigen des Gases in einer Absorptions- oder Naßreinigungskolonne mit einem wäßrigen, Schwefelsäure aufweisenden Säurestrom zum Löslichmachen und Entfernen des Schwefeldioxyds aus dem Gas,

anschließender Durchlauf des wäßrigen Säurestromes durch eine elektrolytische Zelle mit einer Anode und einer Kathode zur Absorption des Schwefeldioxyds,

Anlegen eines elektrischen Potentials an die Elektroden, und

Führen des Säurestromes im Kreislauf zur Naßreinigungskolonne, während Schwefelsäure als Nebenprodukt abgezogen wird und während die Konzentration des wäßrigen Säurestromes mittels Zusatzwasser oder Säure aufrechterhalten wird, dadurch gekennzeichnet, daß die Naßreinigung des Gases in einer ein Packungsmaterial enthaltenden Kolonne durchgeführt wird, das elektrisch leitend ist, und das sowohl als Kontaktfläche für das Gas bzw. die Flüssigkeit dient als auch als elektrochemisch aktive Fläche der Anode, wodurch das Schwefeldioxyd bei Absorption in dem Säurestrom zu schwefeliger Säure umgewandelt wird, wobei der Säurestrom etwa 5-93 Gewichtsprozent Schwefelsäure enthält und wodurch die Elektrolyse derart durchgeführt wird, daß die schwefelige Säure zu Schwefelsäure oxydiert wird.

2. Verfahren nach Anspruch 1, bei dem der Bereich der Konzentration an Schwefelsäure im Säurestrom etwa 5 bis 70 Gewichts-% beträgt.

3. Verfahren nach Anspruch 1, bei dem der Bereich der Konzentration an Schwefelsäure im Säurestrom etwa 20 bis 40 Gewichts-% beträgt.

4. Verfahren nach Anspruch 1, bei dem die Absorptions- oder Naßreinigungskolonne für den Durchlauf eines Abgasstromes durch sie hindurch ausgebildet ist.

5. Verfahren nach Anspruch 1, bei dem die Elektrolyse die folgende Reaktion umfaßt:

$$H_2SO_3 + H_2O \longrightarrow 2H^+ + SO_4^= + H_2 \quad E^\circ = -0{,}20 \text{ V.}$$

## Revendications

1. Procédé pour l'atténuation et le contrôle de la pollution de l'air provoquée par l'émission de dioxyde de soufre dans les gaz d'effluent, de combustion ou d'échappement, ledit procédé comprenant l'enlèvement du dioxyde de soufre dans un tel gaz d'effluent, de combustion ou d'échappement au moyen des étapes d'un cycle continu consistant à :

épurer le gaz dans un absorbeur ou une colonne d'épuration avec un courant d'acide aqueux comprenant de l'acide sulfurique afin de solubiliser le dioxyde de soufre et l'enlever du gaz,

faire passer le courant d'acide aqueux à la suite de l'absorption dudit dioxyde de soufre dans une cellule électrolytique comprenant une anode et une cathode,

appliquer un potentiel électrique entre lesdites électrodes, et

recycler le courant d'acide dans la colonne d'épuration tout en extrayant l'acide sulfurique comme sous-produit et tout en maintenant le concentration du courant d'acide aqueux au moyen d'eau ou d'acide d'appoint, caractérisé en ce que ladite épuration du gaz est effectuée dans une colonne contenant un matériau de garniture, qui est conducteur de l'électricité et qui sert à la fois de surface de contact entre gaz et liquide et de surface électrochimiquement active de ladite anode, d'où il résulte que ledit dioxyde de soufre est transformé, par absorption dans ledit courant d'acide, en acide sulfureux, ledit courant d'acide contenant environ 5-93 pourcents en poids d'acide sulfurique et d'où il résulte que ladite électrolyse est exécutée de façon à oxyder ledit acide sulfureux pour la transformer en acide sulfurique.

2. Procédé selon la revendication 1, dans lequel la gamme de concentration de l'acide sulfurique dans le courant d'acide est comprise entre environ 5 et environ 70 % en poids.

3. Procédé selon la revendication 1, dans lequel la gamme de concentration de l'acide sulfurique dans le courant d'acide est comprise entre environ 20 et environ 40 % en poids.

4. Procédé selon la revendication 1, dans lequel l'absorbeur ou la colonne d'épuration est adapté pour permettre sa traversée par un effluent gazeux.

5. Procédé selon la revendication 1, dans lequel l'électrolyse comprend la réaction :

$$H_2SO_3 + H_2O \rightarrow 2H^+ + SO_4^= + H_2 \quad E^\circ = -0{,}20 \text{ v.}$$

Fig-1

MAKE-UP WATER
OR ACID

VENT

H₂

FLUE
GAS

BY-PRODUCT
ACID

*Fig-2*